# EUROPÄISCHE PATENTANMELDUNG

(11) **EP 3 672 287 A1**
(43) Veröffentlichungstag der Anmeldung: **24.06.2020**
(21) Anmeldenummer: 19209292.2
(22) Anmeldetag: 15.11.2019
(51) Int. Cl.: H04W 4/02, H04W 24/04, H04L 12/24, H04L 29/08, G01C 21/26, G01C 21/28, G01C 21/36

(54) **VERFAHREN, COMPUTERPROGRAMM UND SYSTEM ZUM VORHERSAGEN EINER VERFÜGBARKEIT EINES MOBILFUNKNETZES**

(30) Priorität: 18.12.2018 DE 102018222077
(71) Anmelder: ZF Friedrichshafen AG, 88046 Friedrichshafen (DE)
(72) Erfinder: Coanda, Mihai, 88048 Friedrichshafen (DE); Somoza, Thomas, 88719 Stetten am Bodensee (DE)
(74) Vertreter: ZF Friedrichshafen AG

(57) **Zusammenfassung**

Die vorliegende Erfindung betrifft ein Verfahren zum Vorhersagen einer Verfügbarkeit eines Mobilfunknetzes, sowie ein Computerprogramm und ein System hierzu. Um ein Verfahren anzugeben, das nicht auf bestehende Netzabdeckungskarten beziehungsweise bestehende statistische Daten zurückgreifen muss, schlägt die vorliegende Erfindung ein Verfahren zum Vorhersagen einer Verfügbarkeit eines Mobilfunknetzes vor, umfassend die Schritte: Erfassen von das Mobilfunknetz kennzeichnenden Informationen von mindestens einem mit dem Mobilfunknetz verbundenen Verkehrsteilnehmer (1); Speichern der Informationen in einem Speichermedium (2); Sortieren der gespeicherten Informationen gemäß mindestens einem Sortierkriterium; und Berechnen einer orts- und zeitabhängigen Wahrscheinlichkeit der Verfügbarkeit des Mobilfunknetzes gestützt auf die sortierten Informationen mittels eines Algorithmus (3).

## Beschreibung

Die vorliegende Erfindung betrifft ein Verfahren zum Vorhersagen einer Verfügbarkeit eines Mobilfunknetzes, sowie ein Computerprogramm und ein System hierzu.

Aus der Offenlegungsschrift DE 10 2017 009510 A1 ist ein Verfahren zur Aktualisierung einer digitalen Karte in einem Fahrzeug bekannt. Anhand einer innerhalb des Fahrzeuges hinterlegten Netzabdeckungskarte eines Mobilfunknetzanbieters werden Gebiete ohne Netzabdeckung ermittelt. Eine Menge über eine Mobilfunknetzverbindung von einer zentralen Speichereinheit nachzuladender Kartendaten werden an einer Fahrzeugposition in Abhängigkeit einer für diese Fahrzeugposition in der Netzabdeckungskarte hinterlegten Netzabdeckung und/oder Datenübertragungsrate variabel gesteuert.

In der Offenlegungsschrift DE 10 2013 204373 A1 ist ein Verfahren zum dynamischen Laden und Bereitstellen von Medieninhalten in einem Fahrzeug beschrieben, das die folgenden Schritte auf: Erfassen von Präferenzen für Medieninhalte eines Nutzers des Fahrzeuges; Ermitteln von zum Laden verfügbaren Medieninhalten; und automatisches Laden von Medieninhalten, die den Nutzerpräferenzen entsprechen, unter Berücksichtigung von: einer aktuellen oder prädizierten zeitlichen und/oder räumlichen Verfügbarkeit und/oder Güte eines Mobilfunknetzes, und/oder einer aktuellen und/oder prädizierten Fahrzeugposition, und/oder einer aktuellen und/oder prädizierten Verkehrssituation, und/oder einem aktuellen und/oder prädizierten Zustand des Nutzers, und/oder für eine Übertragung eines Medieninhalts anfallenden Kosten. Insbesondere wird die zeitliche und räumliche Verfügbarkeit und/oder Güte eines Mobilfunknetzes basierend auf statistischen Daten der Netzauslastung des Mobilfunknetzes bestimmt.

Nachteilig an dem vorstehend beschriebenen Stand der Technik ist, dass auf bestehende Netzabdeckungskarten beziehungsweise bestehende statistische Daten zurückgegriffen werden muss.

Es ist daher Aufgabe der vorliegenden Erfindung, ein Verfahren anzugeben, das nicht auf bestehende Netzabdeckungskarten beziehungsweise bestehende statistische Daten zurückgreifen muss.

Zur Lösung dieser Aufgabe schlägt die vorliegende Erfindung in einem ersten Aspekt ein Verfahren zum Vorhersagen einer Verfügbarkeit eines Mobilfunknetzes vor, umfassend die Schritte: Erfassen von das Mobilfunknetz kennzeichnenden Informationen von mindestens einem mit dem Mobilfunknetz verbundenen Verkehrsteilnehmer; Speichern der Informationen in einem Speichermedium; Sortieren der gespeicherten Informationen gemäß mindestens einem Sortierkriterium; und Berechnen einer orts- und zeitabhängigen Wahrscheinlichkeit der Verfügbarkeit des Mobilfunknetzes gestützt auf die sortierten Informationen mittels eines Algorithmus. Mit großem Vorteil sammelt das erfindungsgemäße Verfahren die zum Berechnen der orts- und zeitabhängigen Wahrscheinlichkeit der Verfügbarkeit des Mobilfunknetzes selbst, sodass ein Rückgriff auf bestehende und damit eventuell veraltete Netzabdeckungskarten beziehungsweise statistische Daten obsolet ist.

In einer vorteilhaften Weiterbildung ist vorgesehen, dass die Informationen unabhängig voneinander ausgewählt sind aus einer Gruppe von Informationen, umfassend: Mobilfunkzellenidentifikation; Zeitstempel; Aufenthaltsort des Verkehrsteilnehmers; Signalstärke des Mobilfunknetzes; Upload-Bandbreite; Download-Bandbreite; Metadaten; und Mobilfunknetzanbieter. Die Informationen Mobilfunkzellenidentifikation, Zeitstempel, Aufenthaltsort des Verkehrsteilnehmers, Signalstärke des Mobilfunknetzes, Upload-Bandbreite und Download-Bandbreite in Kombination miteinander sind besonders geeignet, um eine belastbare Vorhersagekarte zur Verfügbarkeit des Mobilfunknetzes zu erstellen.

Eine weitere Ausgestaltung der vorliegenden Erfindung sieht vor, dass der Verkehrsteilnehmer ein Kraftfahrzeug oder ein Fußgänger ist. Fast alle modernen Kraftfahrzeuge sind standardmäßig mit Kommunikationseinheiten ausgestattet, die die erforderliche Funktionalität aufweisen, um Informationen zu senden, die das erfindungsgemäße Verfahren erfasst. Aber auch die meisten Fußgänger und Radfahrer tragen stets ein Smartphone bei sich, welches ebenfalls eine geeignete Kommunikationseinheit darstellt, um Informationen zu senden, die das erfindungsgemäße Verfahren erfasst.

Des Weiteren ist erfindungsgemäß vorgesehen, dass das Speichermedium ein dezentrales Speichermedium sein kann. Ein nicht dezentrales und somit zentrales Speichermedium ist beispielsweise ein Server. Vorteilhafter, weil weniger ausfallgefährdet, ist ein dezentrales Speichermedium, wie beispielsweise eine internetbasierte Data Cloud.

In einer weiteren vorteilhaften Weiterbildung der vorliegenden Erfindung ist das Sortierkriterium gebildet aus einem oder mehreren Kriterien, die ausgewählt sind aus einer Gruppe von Kriterien, umfassend: Mobilfunkzellenidentifikation; Zeitstempel; Aufenthaltsort des Verkehrsteilnehmers; Signalstärke des Mobilfunknetzes; Upload-Bandbreite; Download-Bandbreite; Metadaten; und Mobilfunknetzanbieter. Die Kriterien Mobilfunkzellenidentifikation, Zeitstempel und Aufenthaltsort des Verkehrsteilnehmers in Kombination miteinander sind besonders geeignet, um eine für den Verkehrsteilnehmer und Dritte zweckmäßige Vorhersagekarte zur orts- und zeitabhängigen Verfügbarkeit des Mobilfunknetzes zu erstellen.

Darüber hinaus ist erfindungsgemäß vorgesehen, dass der Algorithmus ein Gruppieren der sortierten Informationen in definierte Zeitintervalle umfassen kann. Hierzu wird die Information Zeitstempel benutzt. Vorzugsweise sind die Zeitintervalle Tageszeitabschnitte, beispielsweise von 06:00 Uhr bis 09:00 Uhr, von 09:00 Uhr bis 11:00 Uhr, von 11:00 Uhr bis 13:00 Uhr, von 13:00 Uhr bis 17:00 Uhr, von 17:00 Uhr bis 21:00 Uhr und von 21:00 Uhr bis 06:00 Uhr am nächsten Tag. Feinere und gröbere Unterteilungen, auch in Abhängigkeit von einem Wochentag, sind von der vorliegenden Erfindung ebenfalls umfasst.

In einer vorteilhaften Weiterbildung ist vorgesehen, dass der Algorithmus in einem künstlichen neuronalen Netzwerk abläuft. Ein künstliches neuronales Netzwerk als zugrunde liegende Netzwerkarchitektur biete große Vorteile durch seine Lernfähigkeit, die eine effiziente Erkennung von Mustern, zum Beispiel von Mustern der orts- und zeitabhängigen Verfügbarkeit des Mobilfunknetzes, ermöglicht.

In einem zweiten Aspekt schlägt die vorliegende Erfindung ein Computerprogramm zum Vorhersagen einer Verfügbarkeit eines Mobilfunknetzes vor, umfassend Computerprogrammmittel, zum Durchführen eines Verfahrens gemäß der vorliegenden Erfindung, wenn das Computerprogramm auf einem Computer ausgeführt wird.

In einem dritten Aspekt schlägt die vorliegende Erfindung ein System zum Vorhersagen einer Verfügbarkeit eines Mobilfunknetzes vor, umfassend Mittel zum Durchführen eines Verfahrens gemäß der vorliegenden Erfindung.

Die für das Verfahren beschriebenen Vorteile übertragen sich vollumfänglich auf das erfindungsgemäße Computerprogramm und das erfindungsgemäße System und sind somit auch deren Vorteile.

Die vorliegende Erfindung wird in einer bevorzugten Ausführungsform unter Bezugnahme auf die Figur beispielhaft beschrieben, wobei weitere vorteilhafte Einzelheiten der Figur zu entnehmen sind. Es zeigt:

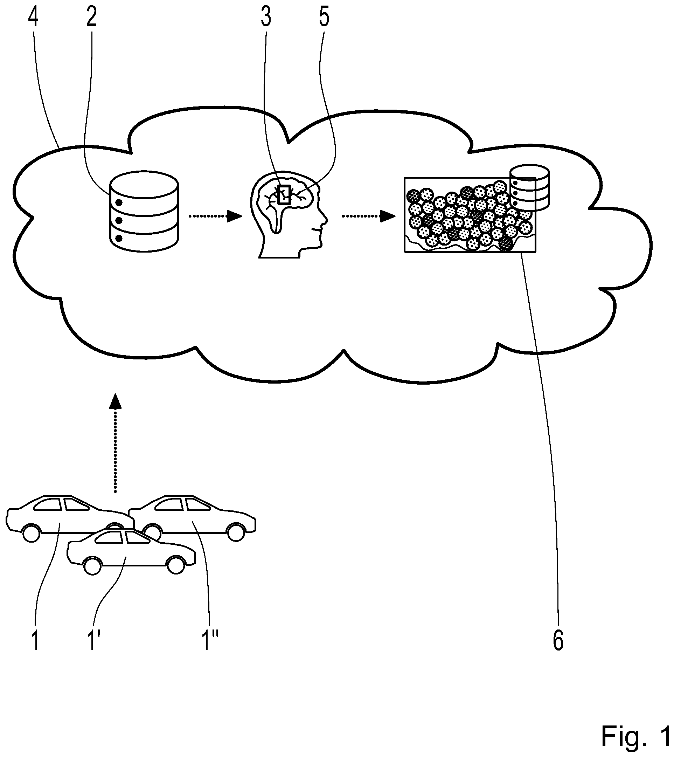

Fig. 1 eine schematische Darstellung eines Verfahrens gemäß der vorliegenden Erfindung.

In Fig. 1 ist eine schematische Darstellung eines Verfahrens gemäß der vorliegenden Erfindung gezeigt. Das Verfahren dient zum Vorhersagen einer Verfügbarkeit eines Mobilfunknetzes und umfasst die Schritte: Erfassen von das Mobilfunknetz kennzeichnenden Informationen von mehreren oder vielen, hier drei, mit dem Mobilfunknetz verbundenen Verkehrsteilnehmern 1, 1', 1"; Speichern der Informationen in einem Speichermedium 2; Sortieren der gespeicherten Informationen gemäß mindestens einem Sortierkriterium; und Berechnen einer orts- und zeitabhängigen Wahrscheinlichkeit der Verfügbarkeit des Mobilfunknetzes gestützt auf die sortierten Informationen mittels eines Algorithmus 3. Die erfassten Informationen sind die Folgenden: Mobilfunkzellenidentifikation; Zeitstempel; Aufenthaltsort der Verkehrsteilnehmer 1, 1', 1"; Signalstärke des Mobilfunknetzes; Upload-Bandbreite; Download-Bandbreite; Metadaten; und Mobilfunknetzanbieter. Die Verkehrsteilnehmer 1, 1', 1" sind Kraftfahrzeuge. Allerdings könnten auch mit Smartphones ausgestattete Fußgänger oder Radfahrer Verkehrsteilnehmer in Sinne der Erfindung sein. Das Speichermedium 2 ist ein dezentrales Speichermedium 4 in Form einer Data Cloud im Internet. Die erfassten Informationen werden in Abhängigkeit vom Zeitstempel sortiert. Die nach dem Zeitstempel sortierten Informationen werden als Teil des Algorithmus 3 in definierte Zeitintervalle gruppiert, wobei die Zeitintervalle Tageszeitabschnitte sind. Die Abgrenzung zwischen zwei zueinander benachbarten Tageszeitblöcken erfolgt an Zeitpunkten, an denen sich Zeiten mit hoher und geringer Verfügbarkeit des Mobilfunknetzes abwechseln. Der Algorithmus 3 läuft in einem künstlichen neuronalen Netzwerk 5 ab. Das künstliche neuronale Netzwerk 5 ist lernfähig und somit besonders geeignet, um möglichst effizient die orts- und zeitabhängige Wahrscheinlichkeit der Verfügbarkeit des Mobilfunknetzes zu berechnen. Die berechnete orts- und zeitabhängige Wahrscheinlichkeit der Verfügbarkeit des Mobilfunknetzes wird in einem Speichermedium gespeichert und kann als eine Vorhersagekarte 6 zur orts- und zeitabhängigen Verfügbarkeit des Mobilfunknetzes bereitgestellt werden. Derartige Vorhersagekarten 6 sind bedeutsam insbesondere zur Erhöhung der Sicherheit bei autonom fahrenden Kraftfahrzeugen. Beispielsweise ermöglicht das erfindungsgemäße Verfahren das Berechnen einer Download-Strategie entlang einer geplanten Reiseroute eines Kraftfahrzeuges, um Navigationskarten-Updates und andere Daten dann aus dem Internet herunterzuladen, wenn die Wahrscheinlichkeit für eine hohe Verfügbarkeit des Mobilfunknetzes groß ist, um den Download schnell und fehlerfrei durchführen zu können.

Eine Auswertung der Informationen nach Mobilfunknetzanbieter erlaubt die Erstellung einer Vorhersagekarte 6 zur orts- und zeitabhängigen Verfügbarkeit von Mobilfunknetzen verschiedener Mobilfunknetzanbieter, um in Abhängigkeit von Ort und Zeit in jeder Mobilfunknetzzelle den Mobilfunkanbieter auszuwählen, der dort die größte Bandbreite bereitstellen kann. Im Zuge einer Optimierung der orts- und zeitabhängigen Verfügbarkeit von Mobilfunknetzen kann mit großem Vorteil eine möglichst effiziente Verteilung von Upload- und Download-Daten erreicht werden.

### Bezugszeichenliste

- 1: Verkehrsteilnehmer
- 1': Verkehrsteilnehmer
- 1": Verkehrsteilnehmer
- 2: Speichermedium
- 3: Algorithmus
- 4: Dezentrales Speichermedium
- 5: Künstliches neuronales Netzwerk
- 6: Vorhersagekarte

## Patentansprüche

1. Verfahren zum Vorhersagen einer Verfügbarkeit eines Mobilfunknetzes, umfassend die Schritte:
- Erfassen von das Mobilfunknetz kennzeichnenden Informationen von mindestens einem mit dem Mobilfunknetz verbundenen Verkehrsteilnehmer (1);
- Speichern der Informationen in einem Speichermedium (2);
- Sortieren der gespeicherten Informationen gemäß mindestens einem Sortierkriterium; und
- Berechnen einer orts- und zeitabhängigen Wahrscheinlichkeit der Verfügbarkeit des Mobilfunknetzes gestützt auf die sortierten Informationen mittels eines Algorithmus (3).

2. Verfahren nach Anspruch 1, **dadurch gekennzeichnet, dass** die Informationen unabhängig voneinander ausgewählt sind aus einer Gruppe von Informationen, umfassend: Mobilfunkzellenidentifikation; Zeitstempel; Aufenthaltsort des Verkehrsteilnehmers; Signalstärke des Mobilfunknetzes; Upload-Bandbreite; Download-Bandbreite; Metadaten; und Mobilfunknetzanbieter.

3. Verfahren nach Anspruch 1 oder 2, **dadurch gekennzeichnet, dass** der Verkehrsteilnehmer (1) ein Kraftfahrzeug oder ein Fußgänger ist.

4. Verfahren nach einem der vorhergehenden Ansprüche, **dadurch gekennzeichnet, dass** das Speichermedium (2) ein dezentrales Speichermedium (4) ist.

5. Verfahren nach einem der vorhergehenden Ansprüche, **dadurch gekennzeichnet, dass** das Sortierkriterium gebildet ist aus einem oder mehreren Kriterien, die ausgewählt sind aus einer Gruppe von Kriterien, umfassend: Mobilfunkzellenidentifikation; Zeitstempel; Aufenthaltsort des Verkehrsteilnehmers; Signalstärke des Mobilfunknetzes; Upload-Bandbreite; Download-Bandbreite; Metadaten; und Mobilfunknetzanbieter.

6. Verfahren nach einem der vorhergehenden Ansprüche, **dadurch gekennzeichnet, dass** der Algorithmus (3) ein Gruppieren der sortierten Informationen in definierte Zeitintervalle umfasst.

7. Verfahren nach Anspruch 6, **dadurch gekennzeichnet, dass** die Zeitintervalle Tageszeitabschnitte sind.

8. Verfahren nach einem der vorhergehenden Ansprüche, **dadurch gekennzeichnet, dass** der Algorithmus (3) in einem künstlichen neuronalen Netzwerk (5) abläuft.

9. Computerprogramm zum Vorhersagen einer Verfügbarkeit eines Mobilfunknetzes, umfassend Computerprogrammmittel, zum Durchführen eines Verfahrens nach einem der vorhergehenden Ansprüche, wenn das Computerprogramm auf einem Computer ausgeführt wird.

10. System zum Vorhersagen einer Verfügbarkeit eines Mobilfunknetzes, umfassend Mittel zum Durchführen eines Verfahrens nach einem der Ansprüche 1 bis 8.
